Europäisches Patentamt

European Patent Office

Office européen des brevets

(11) Publication number: **0 091 890**

**A1**

## EUROPEAN PATENT APPLICATION

(21) Application number: **83850083.3**

(22) Date of filing: **25.03.83**

(51) Int. Cl.³: **F 24 F 7/08**

(30) Priority: **26.03.82 FI 821066**

(43) Date of publication of application:
**19.10.83 Bulletin 83/42**

(84) Designated Contracting States:
**AT BE CH DE FR GB IT LI NL SE**

(71) Applicant: **Verdal Maskinverkstad A/S**

**N-7650 Verdal(NO)**

(72) Inventor: **Ekman, Heinz**
**Pippurn**
**Kirkkonummi(FI)**

(74) Representative: **Wibom, Hans Sven Erik et al,**
**Dr. Ludwig Brann Patentbyra AB Box 7524 Kungsgatan 3**
**S-103 92 Stockholm(SE)**

(54) Apparatus for recovering heat and ventilating a room space.

(57) Heat accumulators (1) in which the outgoing air releases its heat and from which the incoming air picks up heat are connected by one end with the exhaust duct (2) and intake duct (3) of the room space, the direction of flow in these ducts (2, 3) being the same all the time under control by a flap (4), and the opposite ends of the heat accumulators being connected to the fresh air intake duct (5) and the outgoing exhaust duct (6), the direction of flow being the same in these latter ducts (5, 6) all the time under control by another flap (7). The heat accumulators (1) consist of elements which may be added or taken off two and two, in accordance with the required capacity of the apparatus, and that the intake and exhaust ducts (2, 5) carried to the room spaces can correspondingly in a manner known in itself be lengthened or shortened by means of branch pieces.

- 1 -

## Apparatus for recovering heat and ventilating a room space

The present invention concerns a apparatus for the recovery of heat from an indoor space and for its ventilation, consisting of heat accumulators in which the outgoing air releases its heat or from which the incoming air takes up heat, each accumulator being by one end connected with the exhaust and supply ducts of the room space, in which ducts the direction of flow is always the same under control by a flap, and the opposite ends of the heat accumulators being connected with the fresh air intake duct and the outgoing exhaust duct, in which latter ducts the direction of flow is always the same under control by a flap. An apparatus of this type for recovering heat from a room space and ventilating it, known in prior art, has been presented e.g. in the Finnish Patent No. 813454. This is intended in the first place e.g. for detached one-family houses, factory premises or hospitals. Therefore the size of the apparatus has to be dimensioned consistent with the air quantity passing through.

The object of the invention is to provide a new type of apparatus which need not be separately dimensioned for each indoor space of different volume. The apparatus of the invention is characterized in that the heat accumulators consist of elements which can be added or taken away two and two in accordance with the required capacity of the apparatus, and that the intake and exhaust ducts carried to the room spaces are correspondingly, in a manner known in itself, lengthenable and shortenable by the end of branch pieces. By the aid of the invention it becomes possible to manufacture standard-sized components, and the heat accumulator elements are added or subtracted in accordance with the capacity required. In a multi-storey house for instance the apparatus may be accommodated in the attic, whence the intake and exhaust ducts have been conducted to the room spaces of the multi-storey building. If further space is added to the building which also can be ventilated and from which heat can be recovered by the apparatus, all that is done is to add to the apparatus the requisite additional elements.

An advantageous embodiment of the invention is characterized in that the heat accumulator consists of a U-shaped tube element connectable by simple tube connections after another element. Tube elements of this kind are easy and advantageous to manufacture.

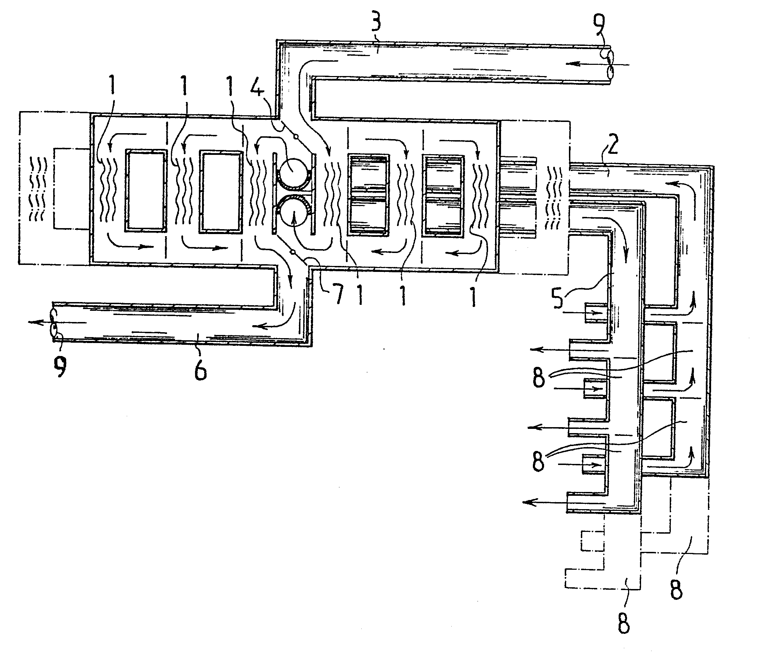

The invention is described in the following with the aid of an example with reference made to the attached drawing, presenting an apparatus according to the invention, sectioned.

The apparatus consists of heat accumulators 1 in which the outgoing air releases its heat and where the incoming air takes up heat. The heat accumulators 1 are connected by one end to the exhaust duct 2 and intake duct 3 of the room space, the direction of flow in these ducts being the same all the time under control by the flap 4. The opposite ends of the heat accumulators 1 have been connected to the fresh air intake duct 5 and to the outgoing exhaust duct 6, in which ducts the direction of flow is constantly the same under control by another flap 7. The heat accumulators 1 consist of elements which can be added or taken off two at a time in accordance with the capacity which the apparatus is required to have. The intake and exhaust ducts 2,5 carried to the room spaces are such that they can be correspondingly lengthened or shortened in a manner known in itself in the art, with the aid of branch pieces 8.

The apparatus can be simply assembled of standard-sized pieces, and if it becomes necessary at a later time to increase the capacity of the apparatus, this is easily accomplished by adding to the apparatus the requisite number of heat accumulator elements. The apparatus always operates with two blowers 9, one in the intake duct 3 and the other in the exhaust duct 6. The flaps may be controlled as has been disclosed in the Finnish patent application No. 813454.

It is obvious to a person skilled in the art that different embodiments of the invention may vary within the scope of the claims following below.

Claims

1. Apparatus for heat recovery from and ventilation of a room space, consisting of heat accumulators (1) in which the outgoing air releases its heat and where the incoming air takes up heat and which have by one end been connected with the exhaust duct (2) and intake duct (3) of the room space, the direction of flow in said ducts being the same all the time under control by a flap (4), and the opposite ends of the heat accumulators (1) being connected with the fresh air intake duct (5) and the outgoing exhaust duct (6), the direction of flow in said latter ducts being the same all the time under control by another flap (7), characterized in that the heat accumulators (1) consist of elements which can be added or subtracted two and two in accordance with the required capacity of the apparatus, and that the intake and exhaust ducts (2,5) conducted to the room spaces can be correspondingly lengthened or shortened in a manner known in itself in the art by means of branch pieces.

2. Apparatus according to claim 1, characterized in that the heat accumulator consists of a U-shaped tube element connectable by simple tube connections after another element.

0091890

## DOCUMENTS CONSIDERED TO BE RELEVANT

| Category | Citation of document with indication, where appropriate, of relevant passages | Relevant to claim | CLASSIFICATION OF THE APPLICATION (Int Cl ³) |
|---|---|---|---|
| Y | EP-A-0 024 269 (BULTEN-KANTHAL AB.) <br> * Page 4, line 16 - page 7, last line; figures 1-8 * | 1 | F 24 F 7/08 |
| Y | DE-A-1 451 232 (INDUSTRIKEMISKA AB.) <br> * Page 3, line 19 - page 6, line 17; figures 1-4 * | 1,2 | |
| Y | US-A-4 280 555 (CIESLAK) <br> * Column 1, lines 6-11; column 6, lines 64-67 * | 1 | |
| A | FR-A-2 189 695 (SOCIETE GENERALE DE PLOMBERIE SA.) <br> * Page 3, lines 4-6; page 8, line 16 - page 10, line 7; figures 8,9 * | 1 | |
| A | GB-A- 114 863 (PEASE) <br> * Page 3, line 43 - page 6, line 8; figure 1 * | 1 | |
| A | US-A-3 754 596 (WARD) | | |

TECHNICAL FIELDS
SEARCHED (Int. Cl. ³)

F 24 F
F 28 D

The present search report has been drawn up for all claims

| Place of search | Date of completion of the search | Examiner |
|---|---|---|
| THE HAGUE | 06-07-1983 | SARRE K.J.K.TH. |